# EUROPÄISCHE PATENTANMELDUNG

(11) **EP 4 307 552 A1**
(43) Veröffentlichungstag der Anmeldung: **17.01.2024**
(21) Anmeldenummer: 23179385.2
(22) Anmeldetag: 15.06.2023
(51) Int. Cl.: H02P 5/74, A47L 15/42, H02P 25/022, H02P 25/04

(54) **ANTRIEBSSYSTEM**

(30) Priorität: 15.07.2022 DE 102022117708
(71) Anmelder: Miele & Cie. KG, 33332 Gütersloh (DE)
(72) Erfinder: Sammoud, Hafedh, 8090 Kelibia (TN); Kiefer, Andreas, 53125 Bonn (DE); Rech, Thomas, 53881 Euskirchen (DE); Schaefer-van den Boom, Klaus, 53489 Sinzig (DE)

(57) **Zusammenfassung**

Die Erfindung betrifft ein Antriebssystem (1) mit wenigstens einem Dreiphasen-Motor (M3) und mit wenigstens einem Frequenzumrichter (15) mit einer ersten Halbbrücke (12), einer zweiten Halbbrücke (13) und einer dritten Halbbrücke (14), wobei der Frequenzumrichter (15) ausgebildet ist, den Dreiphasen-Motor (M3) mittels aller drei Halbbrücken (12, 13, 14) zu betreiben. Das Antriebssystem (1) ist gekennzeichnet durch wenigstens einen Einphasen-Motor (M1), wobei der Frequenzumrichter (15) ferner ausgebildet ist, den Einphasen-Motor (M1) mittels der ersten Halbbrücke (12) und der dritten Halbbrücke (14) zu betreiben, wobei die erste Halbbrücke (12) mittels eines Umschalters (16) zwischen dem Dreiphasen-Motor (M3) und dem Einphasen-Motor (M1) umgeschaltet werden kann und wobei die dritte Halbbrücke (14) sowohl mit dem Dreiphasen-Motor (M3) und mit dem Einphasen-Motor (M1) verbunden ist.

## Beschreibung

Die Erfindung betrifft ein Antriebssystem sowie ein Haushaltsgerät mit einem derartigen Antriebssystem

Zu den bekannten elektrischen Motoren gehören auch die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Dies kann das Drehverhalten des Synchronmotors z.B. beim Anlauf sowie in Abhängigkeit der anzutreibenden Last gezielt beeinflussen.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen wie z.B. bei einfachen Pumpen wie z.B. bei Laugenpumpen in Waschmaschinen höchst unerwünscht, weil die durch den Frequenzumrichter geschaffenen Möglichkeiten der Regelung bzw. der Steuerung des Synchronmotors für diese Anwendungen nicht zwingend benötigt werden und sich somit die Mehrkosten des Frequenzumrichters nicht rentieren. Zu derartigen einfachen Anwendungen wie z.B. bei Laugenpumpen in Waschmaschinen gehören das Abpumpen der Lauge aus dem Waschraum oder das Umfluten. In beiden Fällen ist ein geregelter Betrieb des jeweiligen Pumpenmotors nicht zwingend erforderlich.

Als kostengünstige Alternative zu mittels Frequenzumrichtern betriebenen Synchronmotoren ist es bei einfachen Anwendungen wie z.B. bei Laugenpumpen in Waschmaschinen bekannt, ungeregelte Einphasen-Synchronmotoren als Antriebe z.B. von Laugenpumpen einzusetzen. Hierbei werden üblicherweise permanenterregte Einphasen-Synchronmotoren eingesetzt, so dass auf einen elektrischen Kontakt vom Stator zum Rotor mittels Schleifringen oder Bürsten verzichtet werden kann.

Wie bereits allgemein erwähnt, ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen verzichtet werden. Vielmehr ist eine einfache Ansteuerung des Einphasen-Synchronmotors über eine Schalteinheit (Relais oder Triac) am starren Stromnetz ausreichend, welche von einer Steuerungseinheit betrieben werden kann. Dies kommt insbesondere einfachen Anwendungen ungeregelter Antriebe mit konstanter Drehzahl wie z.B. bei Laugenpumpen in Waschmaschinen zugute, um die Drehzahl zu variieren und den Wirkungsgrad zu verbessern.

Weiterhin ist eine Ansteuerung des Einphasen-Synchronmotors über eine H-Brücke möglich, welche von einer Steuerungseinheit betrieben werden kann.

Trotz des höheren Aufwands der Ansteuerung bei Dreiphasen-Synchronmotoren mittels eines Frequenzumrichters kann dieser Aufwand aufgrund der Vorteile gerechtfertigt sein, welche Dreiphasen-Synchronmotoren bieten können. Hierzu gehören neben einem konstanten Drehmomentenverlauf (keine "Null-Moment-Rotorpositionen") auch die hohe Dynamik, das hohe Drehmoment und die hohe Effizienz.

Wird in einem Gerät wie beispielsweise in einem Haushaltsgerät wenigstens ein geregelt betriebener Einphasen-Synchronmotor verwendet, beispielsweise in einer Waschmaschine für die Umflutpumpe und bzw. oder für die Laugenpumpe, so ist auch jeweils eine H-Brücke (Frequenzumrichter) und eine Steuerungseinheit für den Einphasen-Synchronmotor erforderlich. Wird ferner wenigstens ein Dreiphasen-Synchronmotor verwendet, so ist zusätzlich ein Frequenzumrichter erforderlich. Beides führt zu entsprechenden Herstellungskosten hinsichtlich Material und Montageaufwand, erhöht den Platzbedarf im Gerät bzw. auf der Elektronik sowie den Stromverbrauch und bzw. oder die erzeugte Abwärme. Dies gilt ebenso für andere Einphasen- sowie Dreiphasen-Motoren.

Der Erfindung stellt sich somit das Problem, ein Antriebssystem der eingangs beschriebenen Art bereitzustellen, welches wenigstens einen einphasigen und einen dreiphasigen Motor mit einem geringeren elektronischen bzw. schaltungstechnischen Aufwand als bisher bekannt betreiben kann. Dies soll insbesondere kostengünstiger, bauraumsparender, energiesparender und bzw. oder mit einer geringeren Abwärme erfolgen können. Zumindest soll eine Alternative zu bekannten derartigen Antriebssystemen geschaffen werden.

Ein Ziel der Erfindung ist das Zusammenführen der Elektronik (Frequenzumrichter FU), um das System einfacher zu machen und alle Motoren (3-strängige und 1-strängige) gemeinsam geregelt betreiben zu können.

Erfindungsgemäß wird dieses Problem durch ein Antriebssystem sowie durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem Dreiphasen-Motor und mit wenigstens einem Frequenzumrichter mit einer ersten Halbbrücke, einer zweiten Halbbrücke und einer dritten Halbbrücke, wobei der Frequenzumrichter ausgebildet ist, den Dreiphasen-Motor mittels aller drei Halbbrücken zu betreiben.

Das Antriebssystem ist gekennzeichnet durch wenigstens einen Einphasen-Motor, wobei der Frequenzumrichter ferner ausgebildet ist, den Einphasen-Motor mittels der ersten Halbbrücke und der dritten Halbbrücke zu betreiben, wobei die erste Halbbrücke mittels eines Umschalters zwischen dem Dreiphasen-Motor und dem Einphasen-Motor umgeschaltet werden kann und wobei die dritte Halbbrücke sowohl mit dem Dreiphasen-Motor und mit dem Einphasen-Motor verbunden ist. Der Dreiphasen-Motor kann ein Hauptantrieb des Antriebssystems und der Einphasen-Motor ein Hilfsantrieb des Antriebssystems sein.

Mit anderen Worten kann mittels des Frequenzumrichters zum einen mittels aller drei Halbbrücken der Dreiphasen-Motor wie bisher bekannt betrieben und dabei die Vorteile eines Frequenzumrichters zum Betreiben eines elektrischen Dreiphasen-Motors genutzt werden. Erfindungsgemäß kann zusätzlich derselbe Frequenzumrichter auch für den Betrieb eines weiteren elektrischen Einphasen-Motors verwendet werden, um eine zusätzliche elektronische Schaltung zu dessen Betrieb einzusparen bzw. zu vermeiden. Gleichzeitig kann auf diese Art und Weise auch der Einphasen-Motor mittels eines Frequenzumrichters betrieben und entsprechend dessen Vorteile auch dort genutzt werden. Dies kann den schaltungstechnischen Aufwand entsprechend reduzieren, um zwei elektrische Motoren betreiben zu können, da der Frequenzumrichter alternativ doppelt verwendet werden kann. Dies kann die Kosten hinsichtlich Material und Montage ebenso reduzieren wie den Platzbedarf, den Energieverbrauch und bzw. oder die Wärmeerzeugung. Dies mittels eines Umschalters der ersten Halbbrücke umzusetzen kann insbesondere den schaltungstechnischen Aufwand minimieren.

Gemäß einem Aspekt der Erfindung ist die zweite Halbbrücke nur mit dem Dreiphasen-Motor verbunden. Dies kann eine konkrete Umsetzung darstellen.

Gemäß einem weiteren Aspekt der Erfindung ist der Umschalter als Umschalt-Relais ausgebildet. Dies kann eine konkrete Umsetzung darstellen. Insbesondere können auf diese Art und Weise die Eigenschaften und Vorteile eines Relais genutzt werden.

Gemäß einem weiteren Aspekt der Erfindung entspricht die Ruhestellung des Umschalt-Relais dem Motor, welcher häufiger verwendet wird. Dies kann die Betätigung bzw. die Bestromung des Umschalt-Relais minimieren.

Gemäß einem Aspekt der Erfindung weist das Antriebssystem eine Steuerungseinheit auf, welche ausgebildet ist, die erste Halbbrücke, die zweite Halbbrücke und die dritte Halbbrücke zu betreiben. Somit kann auch hinsichtlich der Umsetzung der Steuerung der Halbbrücken bzw. des Frequenzumrichters der Aufwand etc. reduziert werden, indem alle drei Halbbrücken von einer gemeinsamen Steuerungseinheit betrieben bzw. gesteuert werden können.

Gemäß einem weiteren Aspekt der Erfindung ist die Steuerungseinheit ausgebildet, entweder
- mittels der ersten Halbbrücke, der zweiten Halbbrücke und der dritten Halbbrücke den Dreiphasen-Motor oder
- mittels der ersten Halbbrücke und der dritten Halbbrücke den Einphasen-Motor
zu betreiben. Dies kann eine konkrete Umsetzung darstellen.

Gemäß einem weiteren Aspekt der Erfindung weist die erste Halbbrücke einen ersten Messwiderstand, die zweite Halbbrücke einen zweiten Messwiderstand und die dritte Halbbrücke einen dritten Messwiderstand auf. Dies kann es ermöglichen, die Ströme der jeweiligen Halbbrücken bzw. des Frequenzumrichters im Betrieb, insbesondere seitens der Steuerungseinheit, zu erfassen und beispielsweise zur Regelung des jeweiligen Motors zu verwenden.

Gemäß einem weiteren Aspekt der Erfindung ist die Steuerungseinheit ausgebildet, entweder
- den ersten Messwiderstand, den zweiten Messwiderstand und den dritten Messwiderstand zur Strommessung und zur Regelung des Dreiphasen-Motors oder
- den ersten Messwiderstand und den dritten Messwiderstand zur Strommessung und zur Regelung des Einphasen-Motors
zu verwenden. Hierdurch können der erste und der dritte Messwiderstand, vergleichbar der ersten und zweiten Halbbrücke, sowohl zum Betrieb des Dreiphasen-Motors als auch zum Betrieb des Einphasen-Motors verwendet werden.

Gemäß einem weiteren Aspekt der Erfindung weist das Antriebssystem einen Gleichrichter auf, welcher ausgebildet ist, eine Wechselspannung eines Spannungseingangs des Antriebssystems zu erhalten und eine Gleichspannung der ersten Halbbrücke, der zweiten Halbbrücke und der dritten Halbbrücke zur Verfügung zu stellen. Hierdurch kann eine Umsetzung des Antriebssystems an einer Wechselspannung erfolgen.

Gemäß einem weiteren Aspekt der Erfindung weist das Antriebssystem einen Glättungskondensator auf, welcher ausgebildet ist, die Gleichspannung des Ausgangs des Gleichrichters zu glätten. Hierdurch kann eine Restwelligkeit der gleichgerichteten Wechselspannung reduziert werden.

Gemäß einem weiteren Aspekt der Erfindung ist der Einphasen-Motor ein Einphasen-Synchronmotor und bzw. oder der Dreiphasen-Motor ein Dreiphasen-Synchronmotor. Dies kann die Umsetzung des Antriebssystems mit derartigen Motoren ermöglichen.

Die vorliegende Erfindung betrifft auch ein Haushaltsgerät, vorzugsweise eine Waschmaschine oder einen Geschirrspüler, mit wenigstens einem Antriebssystem wie zuvor beschrieben. Hierdurch können die Eigenschaften und die Vorteile eines erfindungsgemäßen Antriebssystems bei einem Haushaltsgerät umgesetzt und genutzt werden.

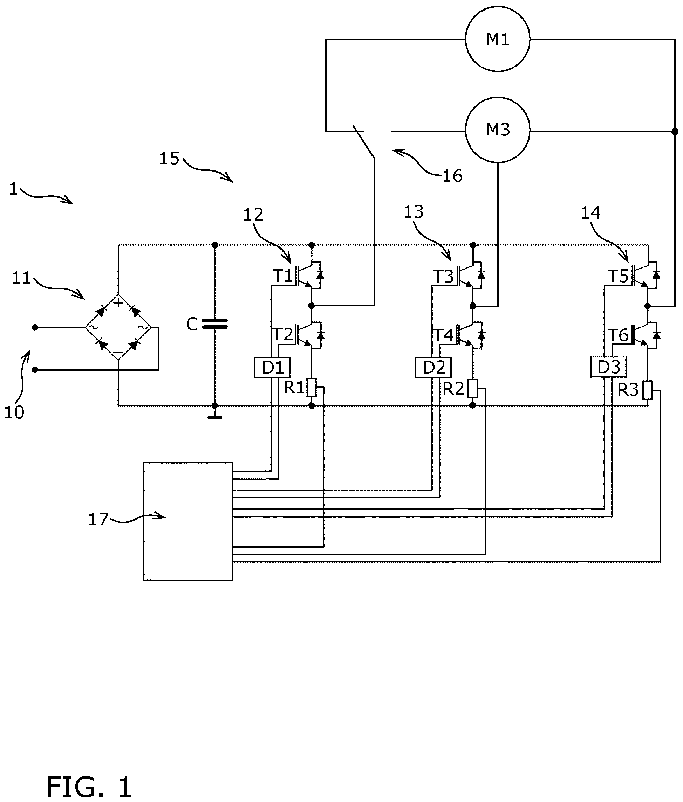

Ein Ausführungsbeispiel der Erfindung ist in den Zeichnungen rein schematisch dargestellt und wird nachfolgend näher beschrieben. Es zeigt
- Figur 1: ein Schaltungsbild eines erfindungsgemäßen Antriebssystems zum Betreiben des Einphasen-Motors; und

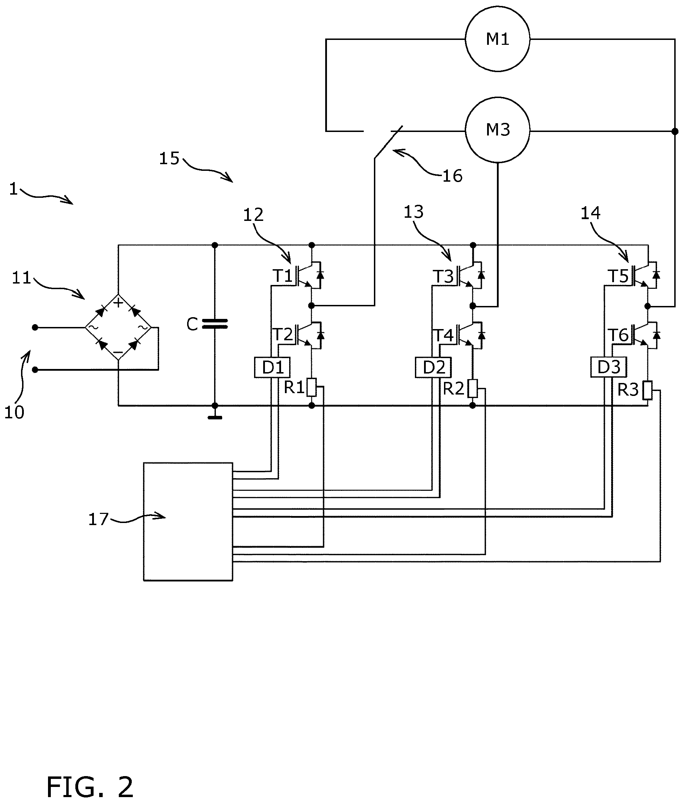

- Figur 2: ein Schaltungsbild des erfindungsgemäßen Antriebssystems zum Betreiben des Dreiphasen-Motors.

Es ist bekannt, ein Antriebssystem 1 über einen Spannungseingang 10 an einer Wechselspannung zu betreiben, indem die Wechselspannung des Spannungseingangs 10 über einen Gleichrichter 11 in eine Gleichspannung gewandelt und dann mittels eines Glättungskondensators C geglättet wird.

Die geglättete Gleichspannung wird nun parallel an eine erste Halbbrücke 12, an eine zweite Halbbrücke 13 und an eine dritte Halbbrücke 14 gelegt, welche gemeinsam einen Frequenzumrichter 15 bilden. Die erste Halbbrücke 12 weist einen ersten Leistungshalbleiter T1, einen zweiten Leistungshalbleiter T2, einen ersten Treiber D1 und einen ersten Messwiderstand R1 als ersten Shunt R1 auf. Die zweite Halbbrücke 13 weist einen dritten Leistungshalbleiter T3, einen vierten Leistungshalbleiter T4, einen zweiten Treiber D2 und einen zweiten Messwiderstand R2 als zweiten Shunt R2 auf. Die dritte Halbbrücke 14 weist einen fünften Leistungshalbleiter T5, einen sechsten Leistungshalbleiter T6, einen dritten Treiber D3 und einen dritten Messwiderstand R3 als dritten Shunt R3 auf.

Es ist ein Dreiphasen-Motor M3 als Dreiphasen-Synchronmotor M3 vorgesehen, welcher direkt bzw. fest mit der zweiten Halbbrücke 13 und mit der dritten Halbbrücke 14 verbunden ist. Es ist ferner ein Einphasen-Motor M1 vorhanden, welcher ebenfalls direkt bzw. fest mit der dritten Halbbrücke 14 verbunden ist, jedoch nicht mit der zweiten Halbbrücke 13. Sowohl der Dreiphasen-Motor M3 als auch der Einphasen-Motor M1 sind indirekt über einen Umschalter 16 in Form eines Umschalt-Relais 16 mit der ersten Halbbrücke 12 verbunden, so dass durch Umschalten des Umschalters 16 entweder der Dreiphasen-Motor M3 oder der Einphasen-Motor M1 mit der ersten Halbbrücke 12 verbunden ist. Entsprechend kann erfindungsgemäß durch das Umschalten des Umschalters 16 entweder der Dreiphasen-Motor M3 oder der Einphasen-Motor M1 vom Frequenzumrichter 15 betrieben werden.

Um den Frequenzumrichter 15 bzw. dessen Halbbrücken 12, 13, 14 entsprechend anzusteuern, ist eine Steuerungseinheit 17 in Form eines Rechners 17 über die drei Treiber D1, D2, D3 jeweils mit den sechs Leistungshalbleitern T1-T6 verbunden. Auch sind die drei Messwiderstände R1, R2, R3 mit der Steuerungseinheit 17 verbunden, so dass im Betrieb die Ströme im Dreiphasen-Motor M3 sowie im Einphasen-Motor M1 erfasst und der Dreiphasen-Motor M3 sowie der Einphasen-Motor M1 hierauf basierend von der Steuerungseinheit 17 geregelt betrieben werden können.

Der Dreiphasen-Motor M3 kann ein Hauptantrieb und der Einphasen-Motor M1 ein Hilfsantrieb eines Haushaltsgeräts sein. Entsprechend kann der Umschalter 15 als Umschalt-Relais 15 um Ruhezustand den Dreiphasen-Motor M3 als Hauptantrieb mit der ersten Halbbrücke 12 verbinden, da der Dreiphasen-Motor M3 als Hauptantrieb häufiger betrieben wird als der Einphasen-Motor M1 als Hilfsantrieb.

In jedem Fall können erfindungsgemäß die Vorteile des Betreibens eines elektrischen Motor M1, M3 mittels des Frequenzumrichters 15 sowohl bei dem Dreiphasen-Motor M3 als auch bei dem Einphasen-Motor M1 genutzt werden, insbesondere die Vorteile eines jeweiligen stromgeregelten Betreibens. Gleichzeitig kann der schaltungstechnische Aufwand hierfür sowie die Herstellungskosten, den Platzbedarf, den Energieverbrauch sowie die Wärmeabgabe des Antriebssystems 1 geringgehalten werden.

### Bezugszeichenliste (Bestandteil der Beschreibung)

- C: Glättungskondensator
- D1: erster Treiber
- D2: zweiter Treiber
- D3: dritter Treiber
- M1: Einphasen- (Synchron-)Motor
- M3: Dreiphasen- (Synchron-)Motor
- R1-R3: Messwiderstände; Shunts
- T1-T6: Leistungshalbleiter

- 1: Antriebssystem
- 10: Spannungseingang
- 11: Gleichrichter
- 12: erste Halbbrücke
- 13: zweite Halbbrücke
- 14: dritte Halbbrücke
- 15: Frequenzumrichter
- 16: Umschalter; Umschalt-Relais
- 17: Steuerungseinheit; Rechner

## Patentansprüche

1. Antriebssystem (1)
mit wenigstens einem Dreiphasen-Motor (M3) und
mit wenigstens einem Frequenzumrichter (15) mit einer ersten Halbbrücke (12), einer zweiten Halbbrücke (13) und einer dritten Halbbrücke (14),
wobei der Frequenzumrichter (15) ausgebildet ist, den Dreiphasen-Motor (M3) mittels aller drei Halbbrücken (12, 13, 14) zu betreiben,
**gekennzeichnet durch**
wenigstens einen Einphasen-Motor (M1),
wobei der Frequenzumrichter (15) ferner ausgebildet ist, den Einphasen-Motor (M1) mittels der ersten Halbbrücke (12) und der dritten Halbbrücke (14) zu betreiben,
wobei die erste Halbbrücke (12) mittels eines Umschalters (16) zwischen dem Dreiphasen-Motor (M3) und dem Einphasen-Motor (M1) umgeschaltet werden kann und
wobei die dritte Halbbrücke (14) sowohl mit dem Dreiphasen-Motor (M3) und mit dem Einphasen-Motor (M1) verbunden ist.

2. Antriebssystem (1) nach Anspruch 1,
wobei die zweite Halbbrücke (13) nur mit dem Dreiphasen-Motor (M3) verbunden ist.

3. Antriebssystem (1) nach Anspruch 1 oder 2,
wobei der Umschalter (16) als Umschalt-Relais (16) ausgebildet ist.

4. Antriebssystem (1) nach Anspruch 3,
wobei die Ruhestellung des Umschalt-Relais (16) dem Motor (M1, M3) entspricht, welcher häufiger verwendet wird.

5. Antriebssystem (1) nach einem der vorangehenden Ansprüche, **gekennzeichnet durch**
eine Steuerungseinheit (17), welche ausgebildet ist, die erste Halbbrücke (12), die zweite Halbbrücke (13) und die dritte Halbbrücke (14) zu betreiben.

6. Antriebssystem (1) nach Anspruch 5, **dadurch gekennzeichnet, dass**
die Steuerungseinheit (17) ausgebildet ist, entweder
• mittels der ersten Halbbrücke (12), der zweiten Halbbrücke (13) und der dritten Halbbrücke (14) den Dreiphasen-Motor (M3) oder
• mittels der ersten Halbbrücke (12) und der dritten Halbbrücke (14) den Einphasen-Motor (M1)
zu betreiben.

7. Antriebssystem (1) nach einem der vorangehenden Ansprüche, **dadurch gekennzeichnet, dass**
die erste Halbbrücke (12) einen ersten Messwiderstand (R1) aufweist,
die zweite Halbbrücke (13) einen zweiten Messwiderstand (R2) aufweist und
die dritte Halbbrücke (14) einen dritten Messwiderstand (R3) aufweist.

8. Antriebssystem (1) nach Anspruch 5 oder 6 und nach Anspruch 7, **dadurch gekennzeichnet, dass**
die Steuerungseinheit (17) ausgebildet ist, entweder
• den ersten Messwiderstand (R1), den zweiten Messwiderstand (R2) und den dritten Messwiderstand (R3) zur Strommessung und zur Regelung des Dreiphasen-Motors (M3) oder
• den ersten Messwiderstand (R1) und den dritten Messwiderstand (R3) zur Strommessung und zur Regelung des Einphasen-Motors (M1)
zu verwenden.

9. Antriebssystem (1) nach einem der vorangehenden Ansprüche, **gekennzeichnet durch**
einen Gleichrichter (11), welcher ausgebildet ist, eine Wechselspannung eines Spannungseingangs (10) des Antriebssystems (1) zu erhalten und eine Gleichspannung der ersten Halbbrücke (12), der zweiten Halbbrücke (13) und der dritten Halbbrücke (14) zur Verfügung zu stellen.

10. Antriebssystem (1) nach Anspruch 9, **gekennzeichnet durch**
einen Glättungskondensator (C), welcher ausgebildet ist, die Gleichspannung des Ausgangs des Gleichrichters (11) zu glätten.

11. Antriebssystem (1) nach einem der vorangehenden Ansprüche, **dadurch gekennzeichnet, dass**
der Einphasen-Motor (M1) ein Einphasen-Synchronmotor (M1) und/oder
der Dreiphasen-Motor (M3) ein Dreiphasen-Synchronmotor (M3) ist.

12. Haushaltsgerät, vorzugsweise Waschmaschine oder Geschirrspüler,
mit wenigstens einem Antriebssystem (1) nach einem der vorangehenden Ansprüche.
